**Europäisches Patentamt**

**European Patent Office**

**Office européen des brevets**

(19)

(11) Veröffentlichungsnummer: **0 065 202**
**B1**

## EUROPÄISCHE PATENTSCHRIFT

(12)

(45) Veröffentlichungstag der Patentschrift:
**12.03.86**

(51) Int. Cl.⁴: **G 01 N 27/56**

(21) Anmeldenummer: **82103849.4**

(22) Anmeldetag: **05.05.82**

(54) **Verfahren zur Messung von Ionenkonzentrationen.**

(30) Priorität: **15.05.81 DE 3119419**
**24.12.81 DE 3151325**

(43) Veröffentlichungstag der Anmeldung:
**24.11.82 Patentblatt 82/47**

(45) Bekanntmachung des Hinweises auf die Patenterteilung:
**12.03.86 Patentblatt 86/11**

(84) Benannte Vertragsstaaten:
**DE FR GB IT NL**

(56) Entgegenhaltungen:
**EP - A - 0 012 035**
**DE - A - 2 618 738**
**DE - B - 1 297 359**
**GB - A - 1 111 516**
**GB - A - 2 017 400**
**US - A - 3 862 895**

**Die Akte enthält technische Angaben, die nach dem**
**Eingang der Anmeldung eingereicht wurden und die**
**nicht in dieser Patentschrift enthalten sind.**

(73) Patentinhaber: **Licentia Patent-Verwaltungs-GmbH,**
**Theodor-Stern-Kai 1, D-6000 Frankfurt/Main 70 (DE)**

(72) Erfinder: **Klein, Manfred, Dipl.-Phys.,**
**Adolf-Dietz-Strasse 25, D-7424 Heroldstatt 1 (DE)**
Erfinder: **Kuisl, Max, Dr.rer.nat., Binsenweiherweg 9,**
**D-7900 Ulm (DE)**

(74) Vertreter: **Schulze, Harald Rudolf, Dipl.-Ing. et al,**
**Licentia Patent-Verwaltungs-GmbH**
**Theodor-Stern-Kai 1, D-6000 Frankfurt/Main 70 (DE)**

**Beschreibung**

Die Erfindung betrifft ein Verfahren zur Messung von Ionenkonzentrationen in Lösungen nach dem Oberbegriff des Patentanspruchs 1.

Aus der DE-B-1 297 359 ist ein Verfahren zur Messung der Ionenkonzentration, insbesondere zur pH-Wert-Messung bekannt, bei dem zwei Glaselektroden und eine Bezugselektrode in die zu messende Lösung getaucht werden. Dabei haben die Glaselektroden unterschiedliche Empfindlichkeiten für das zu bestimmende Ion. Es werden die Potentiale zwischen jeweils einer Glaselektrode sowie der Bezugselektrode gemessen und in einer Differenzschaltung die Potentialdifferenz ausgewertet. Die Anordnung ist dadurch unempfindlich gegenüber Potentialverschiebungen an der Bezugselektrode. Die Verwendung von Glaselektroden bedingt jedoch in nachteiliger Weise die Verwendung von Verstärkern, z.B. Elektrometerverstärkern, mit einem sehr hochohmigen Eingang. Eine solche Anordnung ist empfindlich gegenüber elektrischen Störungen. Ausserdem ist kein mechanisch robuster und kleiner Aufbau eines Sensors möglich, der z.B. für Blutuntersuchungen benötigt wird.

Gemäss der GB-A-2 017 400, die der JP-A-54 081 897 entspricht, werden zur Messung der Ionenkonzentrationen (Ionenaktivität) in einer Differenzschaltung die Ausgangssignale eines ionensensitiven Feldeffekttransistors und einer Referenzelektrode verglichen. Dabei besteht die Referenzelektrode ebenfalls aus einem Feldeffekttransistor mit einem isolierten Gate, das jedoch mit einer Membran aus einem hydrophoben organischen Polymer beschichtet ist, das chemisch inaktiv ist, so dass die Referenzelektrode die Empfindlichkeit «Null» hat. Durch eine weitere Elektrode, eine sogenannte Pseudoreferenzelektrode, wird lediglich das elektrische Potential der zu messenden Lösung eingestellt.

Zur Bestimmung von Ionenkonzentrationen in Lösungen werden vielfach elektrochemische Verfahren eingesetzt. Einfach zu handhabende und den modernen elektronischen Hilfsmitteln angepasste Messmethoden sind Potentialmessungen mit ionenselektiven Elektroden. Ionenselektive Elektroden sind elektromechanische Halbzellen, bei denen an der Phasengrenze Elektrodenmaterial/Elektrolyt eine Potentialdifferenz auftritt. Diese Potentialdifferenz $\Delta\varphi$ steht in Zusammenhang mit der Konzentration (genauer Aktivität a) der Ionenart, für welche die Elektrode empfindlich sein soll. Theoretisch wird diese Beziehung durch die Nernstsche Gleichung

$$\Delta\varphi = \Delta\varphi_o + \frac{RT}{2 \cdot F}\ \ln a_{Me}z+ \qquad (1)$$

begründet. Hierin bedeutet T die absolute Temperatur, R die molare Gaskonstante, F die Faraday-Konstante und z die Wertigkeit der betrachteten Ionenart $Me^{z+}$. $\Delta\varphi_o$ ist das Potential der

Halbzelle für die Ionenaktivität $a_{Me}z+ = 1$. Das Potential $\Delta\varphi_o$ wird Standardpotential genannt. Es ist eine Vielzahl von ionensensitiven Elektroden bekannt. Es ist nicht nur die Bestimmung einfacher anorganischer Ionen möglich, sondern auch die von Aminosäuren und komplexen organischen Verbindungen wie z.B. Enzymen und Eiweissstoffen.

Potentialmessungen in der Elektrochemie werden durchgeführt, indem die Potentialdifferenz zwischen einer Messelektrode und einer Bezugselektrode gemessen wird. Dabei sollte die Messelektrode auf das nachzuweisende Ion möglichst selektiv ansprechen. Andererseits sollte aber die Bezugselektrode gegen Verunreinigungen in der Messlösung (Elektrolyt) unempfindlich sein. Unter Umständen müssen die beiden Elektroden in getrennte Elektrolyte, einen zu messenden Elektrolyten sowie einen Bezugselektrolyten (Standardlösung), getaucht werden, die durch einen sogenannten Stromschlüssel miteinander verbunden sind. Ein Stromschlüssel besteht aus einem gebogenen Glasrohr oder einer Kapillare, die beide Elektrolyte verbindet und die eine Lösung eines Salzes enthält, dessen Kationen und Anionen die gleiche Beweglichkeit aufweisen. Eine derartige Anordnung ist sehr aufwendig.

Es ist eine Erfahrungstatsache in der Elektrochemie, dass die Werte für die absoluten Potentiale an derartigen Elektroden, insbesondere an ionensensitiven Elektroden, störende Schwankungen aufweisen, die beispielsweise durch unerwünschte chemische Veränderungen der Elektroden hervorgerufen werden. Daher ist es üblich, vor jedem Gebrauch einer Elektrode eine Eichung mit Hilfe einer Standardlösung vorzunehmen. Hingegen bleibt die Abhängigkeit des Potentials von der Aktivität des nachzuweisenden Ions bedeutend besser konstant. Bei vielen Elektroden wird sogar der von der Nernstschen Gleichung vorgegebene Wert erreicht. Vielfach wird daher für Reihenmessungen lediglich ein Eichpunkt bestimmt, der den Absolutbetrag des Potentials festlegt, während man sich bei der Konzentrationsabhängigkeit des Potentials auf Herstellerangaben verlässt oder eine Abhängigkeit gemäss der Nernstschen Gleichung voraussetzt. In die Messung des Potentials gehen die Eigenschaften beider Elektroden ein, der Mess- sowie der Bezugselektrode. Bei Bezugselektroden können Schwankungen des (Bezugs-)Potentials von ungefähr 5% auftreten.

Als Messelektrode ist auch ein sogenannter ionensensitiver Feldeffekttransistor (ISFET) anwendbar, der beispielsweise in der Zeitschrift Ion-Selective Electrode Review, Vol. 1, 1979, Seiten 31 bis 79, J. Janata and R.J. Huber «Ion-Sensitive Field Effect Transistors», beschrieben ist. Derartige ionensensitive Feldeffekttransistoren (ISFETs) ermöglichen ebenfalls eine Umwandlung der Ionenkonzentrationen einer Lösung in ein elektrisches Signal. Dabei entsteht ein Potentialunterschied zwischen der Lösung und dem ionensensitiven Gate des ISFETs. Jedoch wird diese Potentialdifferenz nicht unmittelbar gemessen, sondern der dadurch beeinflusste Drain-Source-Strom des ISFETs. Der Drain-Source-Strom ist daher ein Mass für das elektrische Potential an der Gate-Elektrode, die beim ISFET unmittelbar mit dem zu messenden Elektrolyten in Verbindung steht. Als Bezug und zur Festlegung des Arbeitspunktes ist jedoch auch in diesem Falle eine Bezugselektrode notwendig, die das Gatepotential bestimmt. Letztenendes ist daher beim Einsatz von ISFETs wiederum die Genauigkeit und Reproduzierbarkeit der Bezugselektrode massgebend. Bei einer derartigen Verwendung eines ISFET als Messelektrode ist daher kein grundsätzlicher Fortschritt zu erreichen gegenüber der klassischen Potentialmessung mit zwei Elektroden.

Der Erfindung liegt daher die Aufgabe zugrunde, ein Verfahren zur Messung von Ionenkonzentrationen in Lösungen anzugeben derart, dass insbesondere eine weitgehende Unabhängigkeit von Bezugselektroden sowie Standardlösungen zur Eichung der Anordnung erreicht wird.

Diese Aufgabe wird erfindungsgemäss durch die im Patentanspruch 1 angegebenen Merkmale gelöst. Vorteilhafte Ausgestaltungen und Weiterbildungen sind in den abhängigen Ansprüchen zusammengestellt.

Ein erster Vorteil der Erfindung besteht darin, dass Bezugs- und/oder Messelektroden verwendbar sind, die starke zeitliche Schwankungen des absoluten elektrischen Potentials aufweisen, ohne dass dadurch die Genauigkeit und Reproduzierbarkeit von Ionenkonzentrationsmessungen im wesentlichen beeinflusst wird. Ein zweiter Vorteil besteht darin, dass Ionenkonzentrationsmessungen weitgehend unabhängig sind insbesondere vom Material sowie dem konstruktiven Aufbau der Bezugs- und/oder Messelektroden, die daher einfach und billig herstellbar sind.

Ein dritter Vorteil besteht darin, dass insbesondere bei genauen Reihenmessungen weitgehend auf zeitraubende Erst- und/oder Zwischeneichungen der Konzentrationsanzeigeeinrichtung verzichtet werden kann.

Die Erfindung wird im folgenden anhand von Ausführungsbeispielen unter Bezugnahme auf die schematischen Zeichnungen näher erläutert. Es zeigt

Fig. 1 ein schematisches Diagramm zur Erläuterung des Erfindungsgedankens

Fig. 2 eine schematische Darstellung eines Ausführungsbeispiels

Fig. 3 eine schematische Darstellung einer Kennlinie einer verwendeten Messelektrode.

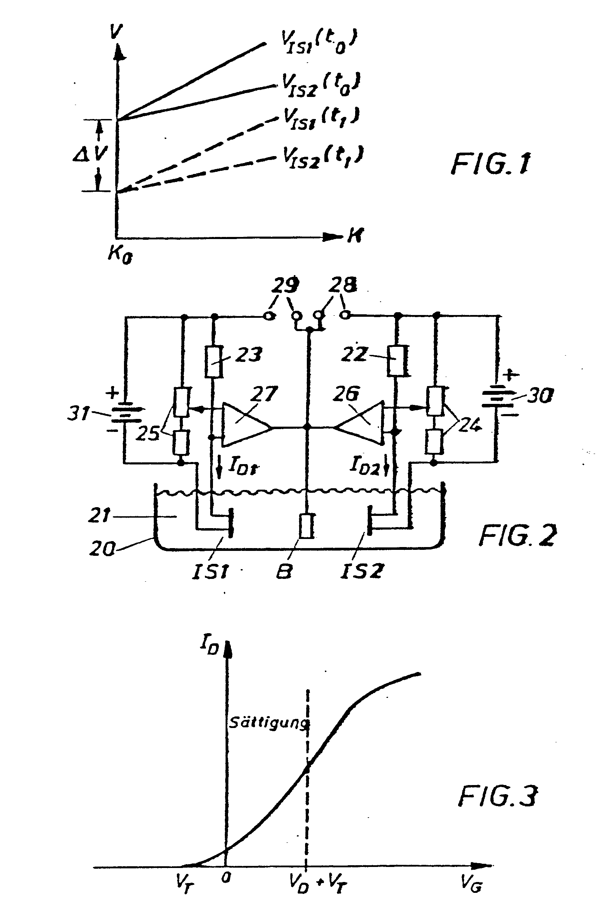

Die Erfindung beruht auf der überraschenden Erkenntnis, dass es Messelektroden gibt, die zwar gegenüber den zu messenden Ionen unterschiedliche Empfindlichkeiten aufweisen, jedoch gegenüber den übrigen Ionen, z.B. denen des Lösungsmittels, im wesentlichen die gleiche Empfindlichkeit zeigen. Ein derartiges Verhalten wird anhand der Fig. 1 näher erläutert. Auf der Abzisse ist die zu messende Konzentration K einer Ionenart aufgetragen. Die Ordinate zeigt das Ausgangssignal V von erfindungsgemässen Messelektroden IS1 bzw. IS2. Diese Ausgangssignale sind mit $V_{IS1}$ bzw. $V_{IS2}$ bezeichnet und lediglich zum besseren Verständnis der Erfindung derart normiert dargestellt, dass bei der Konzentration $K_0$ der gleiche Wert des Ausgangssignals vorhanden ist. Da die Messelektroden IS1 und IS2 gegenüber den zu messenden Ionen unterschiedliche Empfindlichkeiten besitzen, ergeben sich zur Zeit $t_0$ die mit $V_{IS1}(t_0)$ bzw. $V_{IS2}(t_0)$ bezeichneten konzentrationsabhängigen Ausgangssignale. Wird eine derartige Messung zu einer späteren Zeit $t_1$ mit denselben Messelektroden IS1 bzw. IS2 wiederholt, so ergeben sich überraschenderweise die gestrichelt dargestellten Ausgangssignale $V_{IS1}(t_1)$ bzw. $V_{IS2}(t_1)$, die im wesentlichen um den gleichen Betrag $\Delta V$ gegenüber den ursprünglichen Ausgangssignalen verschoben sind. Bei den Messelektroden IS1 bzw. IS2 verändern sich also lediglich die absoluten Werte der Ausgangssignale in gleicher Weise und um den gleichen Betrag, die konzentrationsabhängigen Eigenschaften (Empfindlichkeit) gegenüber dem zu messenden Ion- und/oder Ionengemisch bleiben jedoch im wesentlichen unverändert. Eine Verschiebung der Ausgangssignale um den Betrag $\Delta V$ während der Zeitdifferenz $\Delta t = t_1 - t_0$ kann viele Ursachen haben, z.B. Temperaturänderung der Lösung, chemische und/oder physikalische Veränderungen der Oberflächen der Elektroden.

Es ist daher erfindungsgemäss möglich, aus derartigen Ausgangssignalen $V_{IS1}$ und $V_{IS2}$ gemäss Fig. 1 die Konzentration K des zu messenden Ions- oder Ionengemisches zu berechnen. Dieses wird im folgenden für ein Ausführungsbeispiel dargestellt, bei dem als Messelektroden zwei ionensensitive Feldeffekttransistoren (ISFETs) verwendet werden, die unterschiedliche Empfindlichkeiten gegenüber einem nachzuweisenden Ion besitzen. Wird ein ISFET im sogenannten Sättigungsbereich betrieben, dann gilt für den Drainstrom $I_D$: $I_D = \frac{\alpha}{2}(V_G - V_T)^2$.

Hierin bedeutet $\alpha$ einen Struktur- und Geometriefaktor, in dem gemäss $\alpha = \mu \frac{W}{L} C_0$ die Gateweite W, die Gatelänge L des ISFETs, die Beweglichkeit $\mu$ der Ladungsträger im Kanalbereich und die Gatekapazität $C_0$ enthalten sind. $V_G$ ist die am Gate des ISFETs anliegende elektrische Spannung, $V_T$ stellt die Einsatzspannung dar, bei welcher der ISFET elektrisch zu leiten beginnt; $V_T$ wird im allgemeinen durch die verwendete Halbleiter-Technologie festgelegt. Diese Beziehungen sind Grundlagen der sogenannten MOS-Technologie. Beim ISFET wird die Gatespannung $V_G$ jedoch nicht über eine metallische Schicht an das Gate gelegt, sondern mit Hilfe einer Bezugselektrode über einen flüssigen Elektrolyten. Ausserdem enthält diese Gatespannung $V_G$ bei fest eingestelltem Bezugspotential $V_{EL}$ an der Bezugselektrode eine zusätzliche elektrische Spannung $V_{IS}$, welche durch die Ionensensitivität des ISFET-Gates gegenüber den zu messenden Ionen der Lösung zustande kommt. Diese zusätzliche Spannung $V_{IS}$ verändert sich

mit der Ionenkonzentration der Lösung. Voraussetzungsgemäss ist die Empfindlichkeit der beiden ISFETs unterschiedlich. Für beide ISFETs IS1 bzw. IS2 sind daher die konzentrationsabhängigen elektrischen Spannungen $V_{IS1}$ bzw. $V_{IS2}$ darstellbar als um die Faktoren $k_1$ bzw. $k_2$ modifizierte Nernst-Gleichungen:

$$V_{IS1} = V_{01}+k_1 \cdot \frac{RT}{zF} \ln a_{Me}z+ \text{ für IS1 und} \qquad (2)$$
$$V_{IS2} = V_{02}+k_2 \cdot \frac{RT}{zF} \ln a_{Me}z+ \text{ für IS2,} \qquad (3)$$

wobei $V_{01}$ bzw. $V_{02}$ elektrische Standardspannungen sind, die dem Standardpotential $\Delta\varphi_0$ der Formel (1) entsprechen.

Der Drainstrom an den beiden betrachteten ISFETs IS1 und IS2 ergibt sich dann zu

$$I_{D1} = \frac{\alpha_1}{2} (V_{EL}-V_T + V_{IS1})^2 \text{ für IS1 und} \qquad (4)$$

$$I_{D2} = \frac{\alpha_2}{2} (V_{EL}-V_T + V_{IS2})^2 \text{ für IS2.} \qquad (5)$$

Wenn beide ISFETs in der gleichen Halbleiter-Technologie gefertigt werden, ist die Einsatzspannung $V_T$ für beide identisch. Ausserdem wird während der Messung für beide ISFETs dieselbe Bezugselektrode verwendet, das Bezugspotential $V_{EL}$ ist daher ebenfalls identisch. Im allgemeinen wird auch $\alpha_1 = \alpha_2$ gelten. Dies ist aber keine notwendige Voraussetzung, denn der Fall $\alpha_1 \neq \alpha_2$ kann eine vorteilhafte Schaltungsauslegung ermöglichen. Aus den beiden Gleichungen (4) und (5) für die Drainströme können durch algebraische Umformungen wie Radizierung und Bildung der Differenz die unbekannten Grössen $V_{EL}$ und $V_T$ eliminiert werden. Als Ergebnis ergibt sich die Formel:

$$V_{IS1}-V_{IS2} = \sqrt{2}\left( \sqrt{\frac{I_{D1}}{\alpha_1}} - \sqrt{\frac{I_{D2}}{\alpha_2}} \right). \qquad (6)$$

Diese Differenz kann z.B. schaltungstechnisch nachgebildet werden. Aus den Gleichungen (2) und (3) folgt andererseits

$$V_{IS1}-V_{IS2} = V_{o1}-V_{o2} + (k_1-k_2) \frac{RT}{zF} \ln a_{Me}z+ \qquad (7)$$

Damit ist gezeigt, dass dieser Messwert eine eindeutige Funktion der Ionenaktivität $a_{Me}z+$ in der Lösung ist und keine Abhängigkeit vom Potential der Bezugselektrode besteht. Mit einer geeigneten, nicht dargestellten Schaltungsanordnung, die z.B. Analog-Digitalwandler sowie einen sogenannten Mikroprozessor enthält, ist es daher möglich, die Drainströme $I_{D1}$ und $I_{D2}$ gemäss den Formeln (6) und (7) derart auszuwerten, dass z.B. die Konzentration und/oder die Aktivität des zu messenden Ions oder Ionengemisches unmittelbar angezeigt wird.

In einem anderen Ausführungsbeispiel werden entsprechend Fig. 2 ISFETs IS1, IS2 mit einem im wesentlichen konstanten elektrischen Strom betrieben und die sich einstellenden konzentrations- und/oder aktivitätsabhängigen elektrischen Spannungen ausgewertet.

In einem elektrisch nichtleitenden Gefäss 20, das mit einem zu messenden Elektrolyten 21 gefüllt ist, befinden sich mindestens eine Bezugselektrode B sowie zwei Messelektroden IS1 und IS2, nämlich ISFETs. Um einen konstanten Drainstrom $I_{D1}$ bzw. $I_{D2}$ zu erhalten, wird die jeweilige Gatespannung, in diesem Falle das elektrische Potential zwischen der Bezugs- und einer Messelektrode, entsprechend nachgeregelt. Dazu wird der Spannungsabfall an einem Referenz-Spannungsteiler 24 bzw. 25 verglichen, der einstellbar sein kann. Dieser Vergleich wird durch einen Operationsverstärker 26 bzw. 27 durchgeführt, der seine Ausgangsspannung so lange nachregelt, bis der durch die Gatespannung geänderte Drainstrom wieder seinen ursprünglichen Wert erreicht. Diese Änderung der Ausgangsspannung wird an Ausgangsklemmen 28 bzw. 29 abgegriffen und ausgewertet, z.B. mit Hilfe einer nicht dargestellten Subtrahieranordnung oder mit Hilfe der elektronischen Datenverarbeitung (Mikroprozessor). Mit den Bezugszeichen 30 bzw. 31 sind die erforderlichen Versorgungs-Spannungsquellen bezeichnet. Die Potentiale in den beiden Kreisen verschieben sich bei einer Änderung der Bezugselektroden in gleicher Weise, bei Änderung der Ionenkonzentration jedoch unterschiedlich.

Die Bezugselektrode B dient erfindungsgemäss lediglich zur Einstellung eines Arbeitspunktes der Messelektroden IS1 bzw. IS2, wodurch das Messergebnis unabhängig wird vom elektrischen Bezugspotential der Bezugselektrode B und/oder eventuell störenden elektrischen Potentialen des Elektrolyten und/oder den Messelektroden IS1 bzw. IS2. Daher ist die Art der Bezugselektrode B, z.B. ein elektrisch leitendes Gefäss 20, weitgehend frei wählbar, solange ein dadurch vorgegebenes Bezugspotential innerhalb eines Wertbereiches liegt, der durch eine vorgegebene Kennlinie der verwendeten Messelektroden bestimmt ist. Werden als Messelektroden IS1 bzw. IS2 ISFETs verwendet, so hat die Kennlinie im wesentlichen einen in Fig. 3 dargestellten Verlauf. In Fig. 3 ist der Drainstrom $I_D$ eines ISFETs als Funktion von dessen Gatespannung $V_G$ aufgetragen und mit dem Begriff «Sättigung» ein Bereich bezeichnet, in dem die Formeln (4) bzw. (5) gelten. Im Bereich der Sättigung ist der Drainstrom $I_D$ eines ISFETs im wesentlichen proportional zum Quadrat des am Gate anliegenden elektrischen Potentials. Bei ISFETs liegt die in Fig. 3 gestrichelt eingezeichnete Grenze des Bereiches der Sättigung bei einer Gatespannung $V_G$ von ungefähr 1 V bis 10 V. Diese Grenze ergibt sich aus der Formel $V_G = V_D+V_T$, wobei $V_D$ bzw. $V_T$ die Drain- bzw. Einsatzspannung des ISFETs bedeuten. Die eingangs genannten störenden Schwankungen der Bezugselektrode B sind dagegen wesentlich kleiner, im allgemeinen kleiner als 10 mV. Es muss hervorgehoben werden, dass jeder der beiden ISFETs im Vergleich zur Bezugselektrode arbeitet, dass sich also z.B. ein Drainstrom gemäss dem Bezugspotential einstellt. Das elektrische Potential der Bezugselektrode darf sich daher im Bereich der Sättigung beliebig ändern, ohne dass das durch Differenzbildung gewonnene Messergebnis wesentlich beeinflusst wird. Es entfällt daher die sonst nötige Verwendung von genau hergestellten und damit teuren Bezugselektroden, auch bei genauen elektrochemischen Messungen. Jedes Metall sowie andere beliebige Elektrodenmaterialien sind in gleicher Weise als Bezugselektrode geeignet. In einer gewerblichen Anwendung, z.B. Haushaltsgeräten, ist es möglich, Gefässinnenwände oder metallische Rohrwandungen als Bezugselektrode zu benutzen. Lediglich eine Forderung ist an die Bezugselektrode zu stellen: Sie muss einen genügend hohen elektrischen Austauschstrom zulassen, der eine Umladung der Gates der ISFETs ermöglicht.

Eine weitere Ausgestaltung der Erfindung besteht darin, die Kennlinien der verwendeten Messelektroden IS1 und IS2 derart zu kompensieren, dass die Messung z.B. nicht nur auf den genannten Bereich der Sättigung beschränkt ist, sondern im wesentlichen an einem beliebigen Punkt der Kennlinie der Messelektrode möglich ist. Eine derartige Kompensation erfolgt beispielsweise in einer Schaltungsanordnung gemäss Fig. 2 dadurch, dass die Bezugselektrode B und die Messelektroden IS1 bzw. IS2 in den Rückkopplungszweigen der Operationsverstärker 27 bzw. 26 angeordnet werden. Durch die derartig aufgebauten Regelkreise sind daher Kennlinien gemäss Fig. 3 sowie Störungen kompensierbar, die auf beide Messelektroden gleichartig einwirken.

Es ist möglich, dass durch beide Messelektroden IS1, IS2 ein elektrischer Strom mit unterschiedlicher Stromstärke fliesst und dass beide Messelektroden nicht genau gleichartig aufgebaut sind, worunter z.B. ein ungleicher Abstand zur Bezugselektrode gemeint ist, denn derartige Abweichungen bewirken lediglich eine anordnungsbedingte Verschiebung der Ausgangssignale, z.B. der Spannungen an den Klemmen 28, 29. Derartige Verschiebungen sind bestimmbar, z.B. mittels einer Eichlösung, und können daher bei den Messungen berücksichtigt werden bzw. einmal in einer Messanordnung eingestellt werden als sogenannte Gerätekonstante.

Weiterhin ist es erfindungsgemäss möglich, dass den Drainströmen der ISFETs ein Wechselstrom überlagert wird. In einem derartigen Fall müsste eine entsprechende Auswerteschaltung zur Verarbeitung der genannten Ströme geeignet sein.

In den beschriebenen Ausführungsbeispielen besitzen die Messelektroden IS1, IS2 für die zu messenden Ionen unterschiedliche Empfindlichkeiten, die beispielsweise dadurch erzeugt werden, dass die ISFET-Messelektroden IS1, IS2 verschieden grosse ionensensitive Gate-Flächen besitzen.

In einem weiteren, nicht dargestellten Ausführungsbeispiel werden ISFET-Messelektroden verwendet, die bei gleicher Temperatur gleiche Empfindlichkeiten für die zu messenden Ionen besitzen. Erfindungsgemäss werden die benötigten unterschiedlichen Empfindlichkeiten dadurch erzeugt, dass zwischen den Messelektroden ein bestimmbarer (bekannter und/oder messbarer) Temperaturunterschied aufrecht erhalten wird. Dann entsteht, gemäss der eingangs erwähnten Nernstschen Gleichung (1), ebenfalls eine auswertbare Potentialdifferenz $\Delta\varphi$. Der benötigte Temperaturunterschied ist beispielsweise dadurch herstellbar, dass eine der Messelektroden direkt oder indirekt durch einen elektrischen Strom geheizt wird oder dass zwischen den Messelektroden in der zu messenden Lösung ein Temperaturunterschied aufrecht erhalten wird.

Es ist möglich, dass ein derartiger Temperaturunterschied in unerwünschter Weise eine Verschiebung der elektrischen Werte, z.B. des Arbeitspunktes, der Messelektroden und/oder der daran angeschlossenen Auswerteschaltung bewirkt. Eine derartige Verschiebung ist bestimmbar, z.B. in Form einer Eichkurve, und wird bei der Auswertung der Messung berücksichtigt.

## Patentansprüche

1. Verfahren zur Messung der Ionenkonzentration einer Lösung, bei dem

– zwei ionensensitive Feldeffekttransistoren (IS1, IS2) mit unterschiedlichen Empfindlichkeiten für eine gegebene Ionenart sowie eine elektrisch leitende Bezugselektrode (B) mit der Lösung (21) in Kontakt gebracht werden,

– ein erstes, für die Potentialdifferenz zwischen dem Gate des einen ionensensitiven Feldeffekttransistors (IS1) und der Bezugselektrode (B) repräsentatives Ausgangssignal sowie ein zweites, für die Potentialdifferenz zwischen dem Gate des anderen ionensensitiven Feldeffekttransistors (IS2) und der Bezugselektrode repräsentatives Ausgangssignal gemessen werden,

– die gesuchte Ionenkonzentration aus der Differenz des ersten und zweiten Ausgangssignals ermittelt wird, dadurch gekennzeichnet,

– zur Einstellung des Arbeitspunktes der beiden ionensensitiven Feldeffekttransistoren (IS1, IS2) jeder mit einem vorgegebenen Drainstrom gespeist wird,

– die beiden eingestellten Arbeitspunkte durch getrennte Regelung der jeweiligen Potentialdifferenz zwischen der Bezugselektrode und dem Gate eines jeden ionensensitiven Feldeffekttransistors unabhängig von Konzentrationsschwankungen der Lösung konstant gehalten werden,

– als erstes und zweites Ausgangssignal jeweils den beiden geregelten Potentialdifferenzen entsprechende Spannungen verwendet werden.

2. Verfahren nach Anspruch 1, insbesondere zur Anwendung in Haushaltsgeräten, dadurch gekennzeichnet, dass als Bezugselektrode (B) ein elektrisch leitender Bereich des die Lösung enthaltenden Gehäuses verwendet wird.

3. Verfahren nach einem der vorhergehenden Ansprüche, dadurch gekennzeichnet, dass den Drainströmen der ionensensitiven Feldeffekttransistoren ein Wechselstrom überlagert wird.

4. Verfahren nach einem der vorhergehenden Ansprüche, dadurch gekennzeichnet, dass die Ausgangssignale mittels einer vorgegebenen Lösung mindestens einmal kalibriert werden.

5. Verfahren nach einem der vorhergehenden Ansprüche, dadurch gekennzeichnet, dass die ionensensitiven Feldeffekttransistoren zur Erzielung ihrer unterschiedlichen Empfindlichkeiten auf verschiedenen Temperaturen gehalten werden.

**Claims**

1. Method for the measurement of the ion concentration of a solution, in which

– two ion-sensitive field effect transistors (IS1, IS2) of different sensitivities to a given kind of ion as well as an electrically conducting reference electrode (B) are brought into contact with the solution (21),
– a first output signal representative of the potential difference between the reference electrode (B) and the gate of the one ion-sensitive field effect transistor (IS1) as well as a second output signal representative of the potential difference between the reference electrode and the gate of the other ion-sensitive field effect transistor (IS2) are measured and the sought ion concentration is determined from the difference between the first and the second output signal, characterised thereby, that
– for the setting of the working point of both the ion-sensitive field effect transistors (IS1, IS2), each is fed with a given drain current,
– both the set working points are kept constant by separate regulation of the respective potential difference between the reference electrode and the gate of each one ion-sensitive field effect transistor independently of fluctuations of concentration of the solution and
– voltages respectively corresponding to both the regulated potential differences are used as the first and the second output signal.

2. Method according to claim 1, particularly for application in household appliances, characterised thereby, that an electrically conducting region of the housing containing the solution is used as reference electrode (B).

3. Method according to one of the preceding claims, characterised thereby, that an alternating current is superimposed on the drain currents of the ion-sensitive field effect transistors.

4. Method according to one of the preceding claims, characterised thereby, that the output signals are calibrated at least once by means of a given solution.

5. Method according to one of the preceding claims, characterised thereby, that the ion-sensitive field effect transistors are kept at different temperatures for the attainment of their different sensitivities.

**Revendications**

1. Procédé pour la mesure de la concentration ionique d'une solution, dans lequel:

– deux transistors à effet de champ sensibles aux ions (IS1, IS2), présentant des sensibilités différentes à un type d'ion donné, et une électrode de référence (B) conductrice sont mis en contact avec la solution (21);
– un premier signal de sortie, représentatif de la différence de potentiel entre la grille d'un transistor à effet de champ sensible aux ions (IS1) et l'électrode de référence (B), et un second signal de sortie, représentatif de la différence de potentiel entre la grille de l'autre transistor à effet de champ sensible aux ions (IS2) et l'électrode de référence, sont mesurés; et
– la concentration ionique recherchée est déterminée à partir de la différence entre le premier et le second signal de sortie, ledit procédé étant caractérisé en ce que:
– pour le réglage du point de fonctionnement des deux transistors à effet de champ sensibles aux ions (IS1, IS2), chacun d'eux est alimenté par un courant de drain prédéterminé;
– les deux points de fonctionnement ajustés sont maintenus constants, indépendamment des fluctuations de concentration de la solution, par régulation séparée de la différence de potentiel entre l'électrod de référence et la grille de chaque transistor à effet de champ sensible aux ions; et
– le premier et le second signal de sortie sont constitués par des tensions correspondant aux deux différences de potentiel réglées.

2. Procédé selon revendication 1, destiné en particulier à l'application à des appareils ménagers, caractérisé en ce qu'une zone conductrice du boîtier contenant la solution est utilisée comme électrode de référence (B).

3. Procédé selon une des revendications 1 ou 2, caractérisé par la superposition d'un courant alternatif au courant de drain des transistors à effet de champ sensibles aux ions.

4. Procédé selon une quelconque des revendications 1 à 3, caractérisé en ce que les signaux de sortie sont étalonnés une fois au moins à l'aide d'une solution prédéterminée.

5. Procédé selon une quelconque des revendications 1 à 4, caractérisé en ce que les transistors à effet de champ sensibles aux ions sont maintenus à des températures différentes pour produire leurs sensibilités différentes.

FIG.1

FIG.2

FIG.3